# FASCICULE DE BREVET EUROPEEN

(11) **EP 3 770 694 B1**
(45) Date de publication et mention de la délivrance du brevet: **08.12.2021**
(21) Numéro de dépôt: 19187810.7
(22) Date de dépôt: 23.07.2019
(51) Int. Cl.: G04B 17/28

(54) **STOP-CAGE D'HORLOGERIE COMPORTANT DEUX ELEMENTS ELASTIQUES D'ARRET**
ANSCHLAGKÄFIG FÜR UHR MIT ZWEI ELASTISCHEN ANSCHLAGELEMENTEN
TIMEPIECE STOP-CAGE COMPRISING TWO ELASTIC STOPPING ELEMENTS

(43) Date de publication de la demande: 27.01.2021
(73) Titulaire: Omega SA, 2502 Bienne (CH)
(72) Inventeur: JEANRENAUD, Timothée, 1400 Yverdon-les-Bains (CH); MONACHON, Jean-Claude, 2022 Bevaix (CH)
(74) Mandataire: ICB SA

(56) Documents cités:
- EP-A1- 2 246 752
- EP-A1- 2 871 536
- WO-A2-03/048871

## Description

### Domaine de l'invention

L'invention concerne un dispositif limiteur d'horlogerie pour une montre, comportant un oscillateur, et comportant des moyens pour la limitation de l'écart de marche de cet oscillateur dans les différentes positions de ladite montre dans l'espace, ledit dispositif comportant au moins un tourbillon ou un carrousel, qui comporte une cage qui est montée pivotante autour d'un axe de cage par rapport à une platine, qui est porteuse d'une roue fixe quand ledit dispositif limiteur comporte un tourbillon, laquelle cage porte ledit oscillateur et comporte une roue de cage agencée pour être entraînée par une source d'énergie de la montre ou d'un mouvement au travers d'un rouage, et laquelle cage porte un mécanisme d'échappement agencé pour coopérer avec ledit oscillateur, et comportant un pignon d'échappement engrenant avec ladite roue fixe quand ledit dispositif limiteur comporte un tourbillon ou bien engrenant avec une roue de moyenne ou une roue de seconde, que comporte ledit rouage, quand ledit dispositif limiteur comporte un carrousel.

L'invention concerne encore une montre comportant un mouvement d'horlogerie comportant des moyens de stockage d'énergie, un oscillateur, des moyens de mise à l'heure, et un tel dispositif limiteur.

L'invention concerne le domaine des montres mécaniques de haute précision chronométrique équipées de tourbillons ou carrousels, et des mécanismes dits stop-seconde ou stop-cage agencés pour effectuer un réglage fin de l'état de la montre.

### Arrière-plan de l'invention

Le document GB674764 au nom de HEPTINSTALL décrit un doigt-ressort de blocage d'un balancier.

Le document EP1617305B1 au nom de MONTRES BREGUET décrit une commande d'arrêt, manuelle par la tige, de leviers à patins pour le blocage d'un balancier.

Le document EP2787400B1 au nom de CHOPARD décrit un élément d'arrêt, solidaire en rotation d'une cage, et qui est un disque coaxial à cette cage, déplacé axialement pour une friction axiale avec un balancier.

Le document EP2085832B1 au nom de FREDERIC PIGUET décrit un mécanisme d'embrayage à friction, par placage radial d'éléments d'embrayage en extrémités de bras en étoile dans une surface cylindrique d'un plateau d'entraînement, sous l'action axiale d'un ressort d'embrayage.

Le document EP2871536 au nom de GROSSMANN UHREN divulgue un mécanisme d'arrêt pour un tourbillon, ce mécanisme comportant une brosse agissant sur la serge du balancier.

### Résumé de l'invention

L'invention se propose de stopper une cage de tourbillon, ou de carrousel, lors de la mise à l'heure pour pouvoir régler une montre à la seconde près.

A cet effet, l'invention concerne un dispositif limiteur d'horlogerie pour la limitation de l'écart de marche d'un oscillateur que comporte une montre, selon la revendication 1.

L'invention concerne encore une montre comportant un mouvement d'horlogerie comportant des moyens de stockage d'énergie, un oscillateur, des moyens de mise à l'heure, et un tel dispositif limiteur.

### Description sommaire des dessins

D'autres caractéristiques et avantages de l'invention apparaîtront à la lecture de la description détaillée qui va suivre, en référence aux dessins annexés, où :

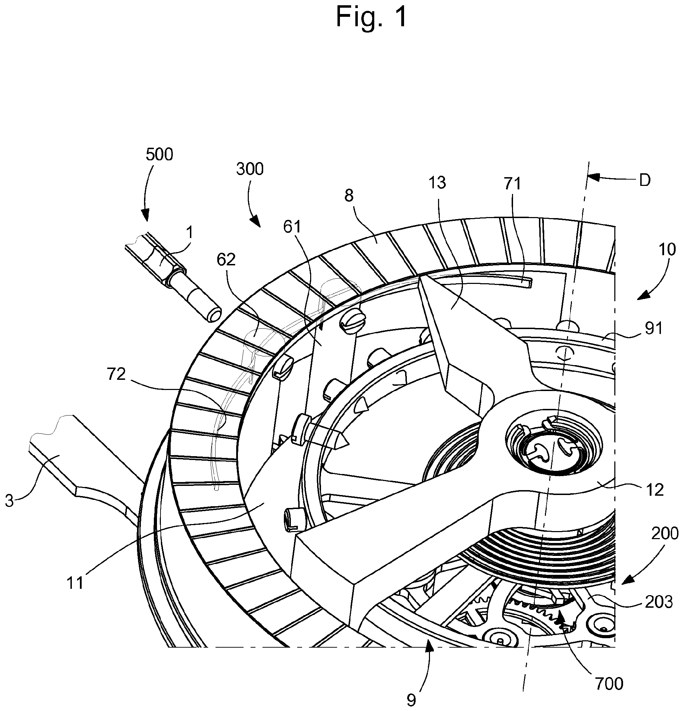

- la figure 1 représente, de façon schématisée, partielle, et en perspective de dessus, c'est-à-dire telle que visible par l'utilisateur de la montre, un dispositif limiteur d'horlogerie pour la limitation de l'écart de marche d'un oscillateur, cet oscillateur à balancier-spiral étant porté par la cage d'un tourbillon ; deux arbres portant chacun un élément élastique en porte-à-faux sont pivotés dans une platine non représentée, et leur rotation contraire est commandée par des renvois visibles sous le pont inférieur de la cage du tourbillon, et dont la rotation de l'un des deux est commandée par une tringle d'enclenchement mue par un organe de commande de la montre, ici constitué par une tige de remontage et de mise à l'heure ; un canon de cadran représenté en transparence sert de butée arrière aux éléments élastiques, ici présentés dans une position de repos dans laquelle l'oscillateur est libre ; ce canon de cadran constitue avantageusement une échelle d'affichage, avec laquelle coopère un index du pont supérieur de cage, visible au-dessus du balancier ;

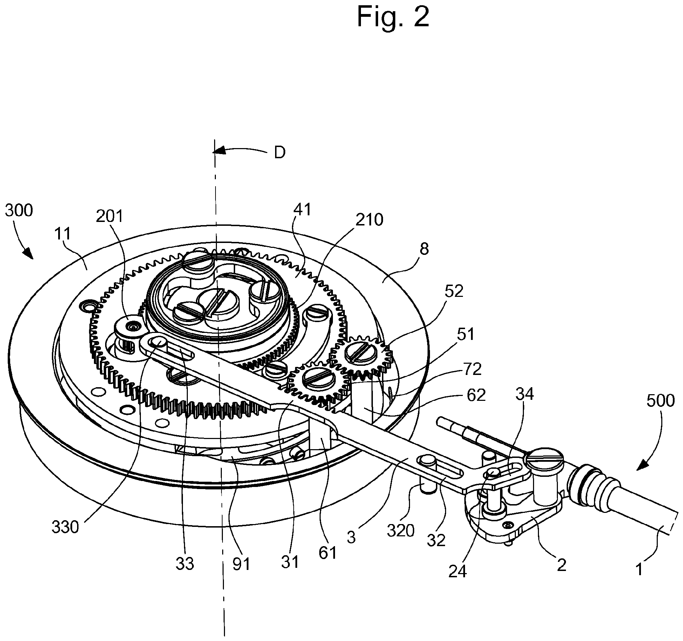

- la figure 2 représente, de façon similaire, en vue de dessous, c'est-à-dire du côté opposé, le mécanisme de la figure 1, où les éléments élastiques ne sont plus visibles, mais où on voit le mécanisme articulé de commande de la tringle d'enclenchement pour actionner les renvois ; cette vue montre, sous l'extrémité de la tringle la plus éloignée de la tige, le pignon d'échappement qui engrène avec une roue fixe pour mouvoir la cage ; les positionnements correspondant aux positions T1 et T2 de la tige sont représentés en superposition ;

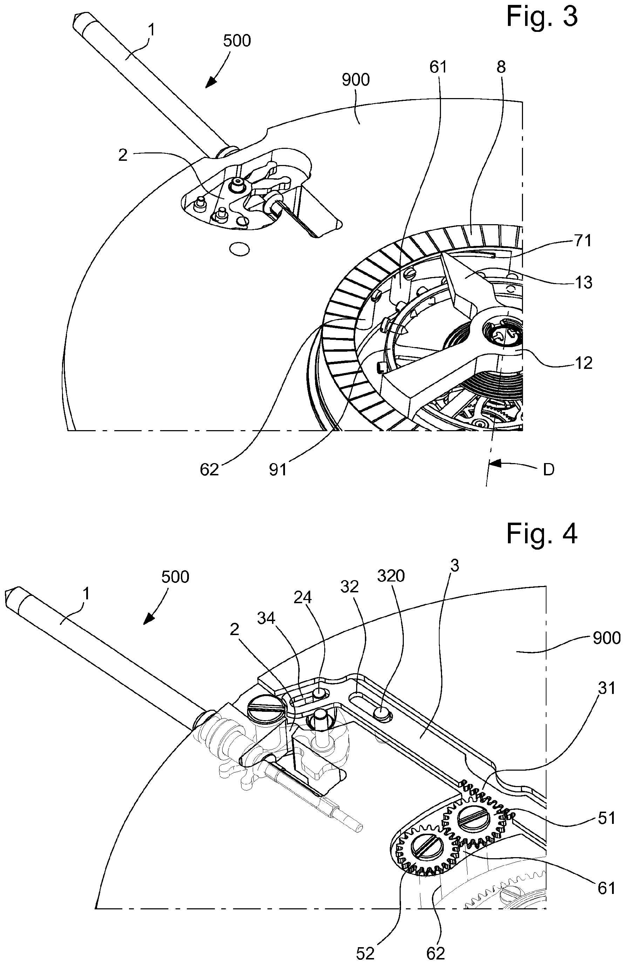

- la figure 3 est similaire à la figure 1, dans la même position de repos, et comporte la représentation de la platine, avec la tige de commande et la tirette dans leur position de service ;
- la figure 4 est un détail dans la position de la figure 2, montrant les articulations de la tringle d'enclenchement, et le jeu des deux renvois contrarotatifs ;

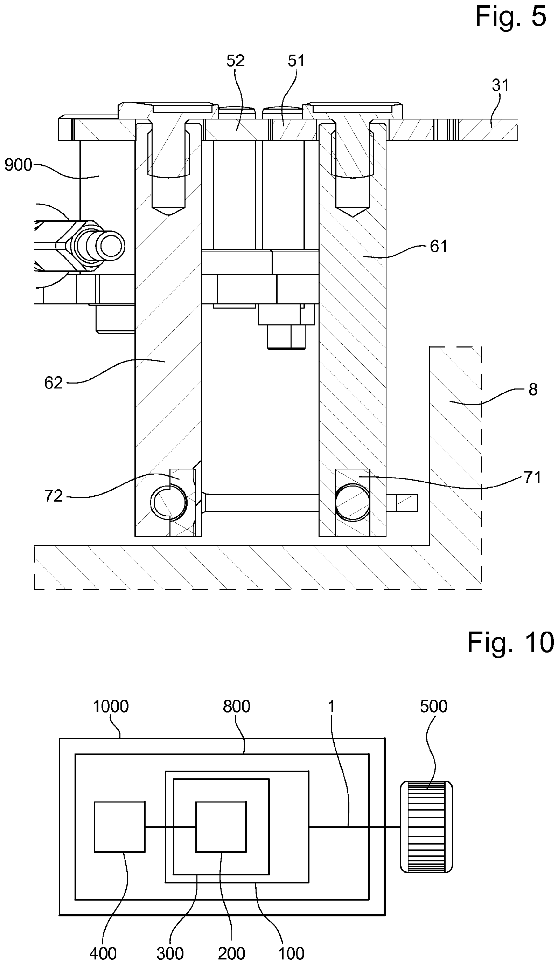

- la figure 5 représente, de façon schématisée et en coupe passant par les axes des arbres des renvois, les deux ensembles mobiles chacun constitué d'un pignon de renvoi, d'un arbre pivoté dans la platine, et d'un élément élastique, ce dernier étant limité par le canon de cadran ;

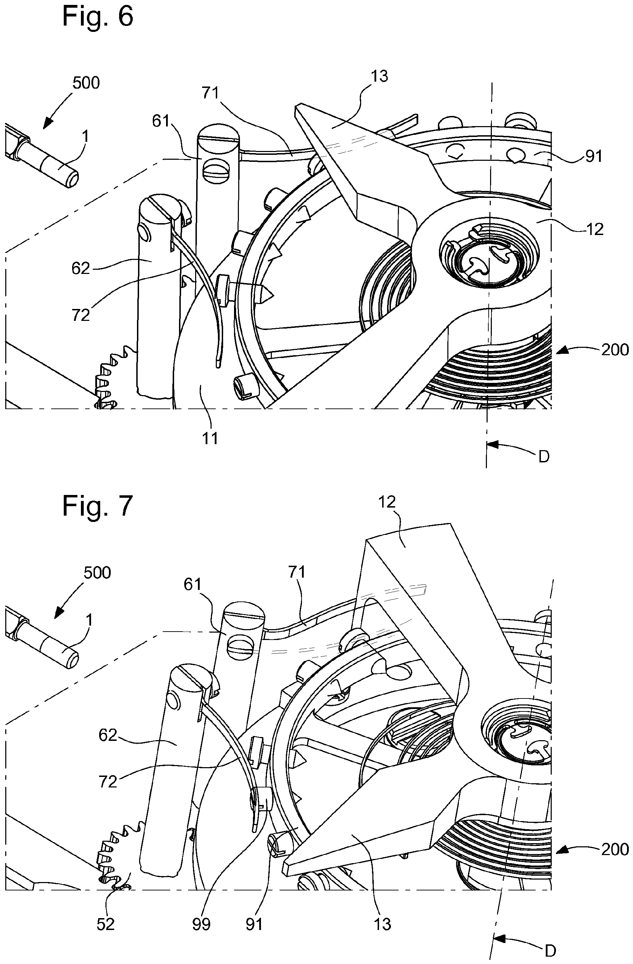

- la figure 6 représente, de façon similaire à la figure 3, le même mécanisme dans une position active où les deux éléments élastiques sont en appui sur le balancier, et le stoppent, en appliquant sur ce balancier des couples de sens opposés ;
- la figure 7 représente, de façon similaire à la figure 6, le même mécanisme dans une position active où les deux éléments élastiques sont en appui, mais cette fois l'un sur le balancier, et l'autre sur le pont supérieur de la cage du tourbillon ;

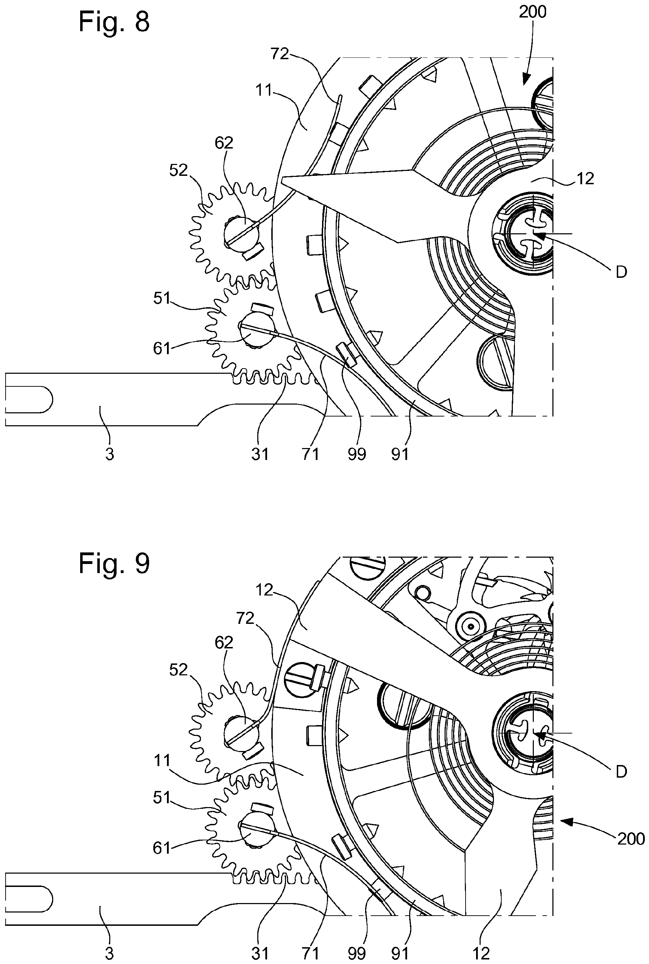

- la figure 8 est une vue partielle et de dessus correspondant à la position de la figure 6 ;
- la figure 9 est une vue partielle et de dessus correspondant à la position de la figure 7 ;
- la figure 10 est un schéma-blocs représentant une montre comportant un mouvement d'horlogerie comportant des moyens de stockage d'énergie, un oscillateur, des moyens de mise à l'heure, et un tel dispositif limiteur.

### Description détaillée des modes de réalisation préférés

L'invention concerne le domaine des montres mécaniques à performances chronométriques élevées.

Pour améliorer l'insensibilité aux positions d'une montre 1000, il est connu de l'équiper d'un dispositif limiteur 100 d'horlogerie, comportant un oscillateur, et apte à la limitation de l'écart de marche de cet oscillateur 200, dans les différentes positions de la montre 1000 dans l'espace.

Ce dispositif 100 comporte au moins un tourbillon 300 ou un carrousel, qui, dans l'un ou l'autre cas, comporte une cage 10 qui est montée pivotante autour d'un axe de cage D par rapport à une platine 900.

Cette platine 900 est porteuse d'une roue fixe 210 quand le dispositif limiteur 100 comporte un tourbillon 300.

La cage 10 comporte un pont inférieur 11 et un pont supérieur 12. Le pont inférieur 11 de la cage 10 porte l'oscillateur 200, et comporte une roue de cage 41, qui est agencée pour être entraînée par une source d'énergie 400 de la montre 1000 ou d'un mouvement 800 que comporte la montre, au travers d'un rouage. Cette source d'énergie 400 peut notamment comporter au moins un barillet ou similaire.

Le pont inférieur 11 porte encore une partie du mécanisme d'échappement 700, qui est agencé pour coopérer avec l'oscillateur 200, et qui comporte un pignon d'échappement 201.

Un pont supérieur de cage 12 protège à la fois l'oscillateur 200, le mécanisme d'échappement 700 maintenu par un pont d'échappement 203 ; ce pont supérieur 12 peut encore protéger une partie du mécanisme selon l'invention.

Ce pignon d'échappement engrène avec la roue fixe 210 quand le dispositif limiteur 100 comporte un tourbillon 300, ou bien engrène avec une roue de moyenne ou une roue de seconde, que comporte le rouage, quand le dispositif limiteur 100 comporte un carrousel.

Le dispositif limiteur 100 selon l'invention permet de stopper un mobile de l'oscillateur 200, en particulier un mobile inertiel comme un balancier 91, porté par une cage 10 de tourbillon ou de carrousel, lors de l'opération de mise à l'heure. Le mécanisme est conçu pour stopper également la cage 10.

Les figures illustrent une variante particulière, non limitative, où le mécanisme selon l'invention permet de stopper un ensemble balancier-spiral, qui constitue l'oscillateur 200, sur une cage 10 que comporte un tourbillon 300, lors de l'opération de mise à l'heure.

Ainsi, par rapport à un tourbillon ou un carrousel classique, qui comporte une cage 10, qui porte elle-même un oscillateur 200, notamment mais non limitativement un balancier-spiral comme dans le cas des figures, le mécanisme selon l'invention comporte un nombre limité de composants spécifiques, montés sur une roue de cage 41 que comporte la cage 10 :
- une tringle d'enclenchement 3, commandée par un organe de commande de la montre, qui comporte notamment dans le cas des figures une tige de remontoir et de mise à l'heure 1, articulée avec une tirette 2 ;
- deux renvois d'entraînement 51 et 52, engrenant l'un avec l'autre de façon à tourner en sens contraire, et dont l'un engrène avec une crémaillère 31, ou un secteur denté, que comporte la tringle d'enclenchement 3 ; chaque renvoi d'entraînement 51, 52, est porté par un arbre respectif 61, 62, pivoté dans la platine 900 ;
- chaque renvoi d'entraînement 51, 52, porte, à l'autre extrémité de son arbre 61, 62, au moins un élément élastique 71, 72, lui-même comportant au moins une lame élastique et/ou au moins un fil élastique, et qui est agencé pour prendre appui sur un mobile de l'oscillateur 200, qui est le balancier 91 dans le cas particulier des figures, et qui est aussi capable de prendre appui sur le pont supérieur de cage 12, et possède à cet effet l'élasticité nécessaire pour assurer un appui sur différents diamètres.

De façon avantageuse, le mécanisme selon l'invention comporte encore un canon de cadran 8, agencé pour loger et protéger les éléments élastiques 71 et 72.

Ainsi, selon l'invention, le dispositif 100 comporte un premier renvoi d'entraînement 51 et un deuxième renvoi d'entraînement 52 tous deux pivotés dans la platine 900 et de rotation contraire l'un à l'autre et dont l'un des deux est entraîné en rotation par une tringle d'enclenchement 3 agencée pour coopérer avec un organe de commande externe au tourbillon 300 ou carrousel, pour une rotation synchrone du premier renvoi d'entraînement 51 et du deuxième renvoi d'entraînement 52 sous l'action d'un mouvement exercé par l'organe de commande.

Le premier renvoi d'entraînement 51 et le deuxième renvoi d'entraînement 52 portent chacun au moins un élément élastique 71, 72, comportant au moins une lame élastique et/ou un fil élastique. Chaque élément élastique 71, 72, est agencé pour prendre appui sur au moins un mobile de l'oscillateur 200 pour arrêter l'oscillateur 200 lors d'un passage de l'organe de commande d'une position de repos à une position active dans laquelle chaque élément élastique 71, 72, est en appui sur un mobile de l'oscillateur 200, ou sur le pont supérieur 12 de la cage 10, et pour rester à distance du pont supérieur 12 et de tout mobile de l'oscillateur 200 quand l'organe de commande est dans sa position de repos.

Plus particulièrement, le premier renvoi d'entraînement 51 et le deuxième renvoi d'entraînement 52 ont chacun un débattement angulaire suffisant pour permettre à un élément élastique 71, 72, de prendre un appui sur un pont supérieur 12 de la cage 10, quand ce pont 12 se présente dans le secteur angulaire couvert par l'élément élastique 71, 72, considéré.

Plus particulièrement, le dispositif 100 comporte des moyens de mise à l'heure 500, qui constituent ou commandent l'organe de commande, lequel est agencé pour mouvoir la tringle d'enclenchement 3 dans un premier sens d'activation lors du passage des moyens de mise à l'heure 500 d'une position de repos T1 à une position activée T2, et pour mouvoir la tringle d'enclenchement 3 dans un deuxième sens contraire au premier sens lors du passage des moyens de mise à l'heure 500 de la position activée T2 à la position de repos T1.

Plus particulièrement, l'organe de commande comporte une tirette 2 montée pivotante et agencée pour, lors d'une translation d'une tige de commande 1 commandant le pivotement de la tirette 2, imprimer une translation de la tringle d'enclenchement 3, laquelle comporte une crémaillère 31, ou un secteur denté, engrenant avec le premier renvoi d'entraînement 51 ou le deuxième renvoi d'entraînement 52 pour le passage de la position de repos à la position activée, ou inversement.

Plus particulièrement, le tourbillon 300 ou carrousel comporte un canon de cadran 8 comportant une paroi sensiblement cylindrique autour de sa cage 10. Ainsi, dans la position de repos, les éléments élastiques 71, 72, sont protégés et cachés par le canon de cadran 8, et sont rabattus au contact de la surface interne de la paroi sensiblement cylindrique ou dans son voisinage immédiat.

Plus particulièrement, ce canon de cadran 8 comporte une surface d'affichage frontale 81 sensiblement annulaire, en regard de laquelle est mobile un index d'affichage 13 que comporte la cage 10, par exemple pour l'affichage des secondes, ou autre.

Plus particulièrement, chaque élément élastique 71, 72, s'étend en porte-à-faux par rapport à un arbre 61, 62, porteur du premier renvoi d'entraînement 51 ou respectivement deuxième renvoi d'entraînement 52.

Plus particulièrement, chaque élément élastique 71, 72, présente une surface convexe du côté de la cage 10.

Plus particulièrement, chaque élément élastique 71, 72, comporte, à l'opposé de son arbre 61, 62, respectif, une extrémité distale comportant une boucle avec une concavité de même sens que l'élément élastique 71, 72, et un rayon de courbure inférieur à celui de la partie agencée pour venir en contact avec le mobile de l'oscillateur 200.

Plus particulièrement, l'oscillateur 200 est un ensemble balancier-spiral.

L'invention concerne encore une montre 1000 comportant un mouvement d'horlogerie 800 comportant des moyens de stockage d'énergie 400, un oscillateur 200, des moyens de mise à l'heure 500, et un tel dispositif limiteur 100 intégrant cet oscillateur 200.

Plus particulièrement, le tourbillon 300 ou carrousel constitue un organe d'affichage de la montre 1000 ou est agencé pour entraîner au moins un organe d'affichage de la montre 1, et les moyens de mise à l'heure 500 constituent ou commandent l'organe de commande.

Le fonctionnement est le suivant :
En position de repos T1, le mécanisme se présente dans les conditions suivantes :
La tirette 2 est fixe, comporte un pion de lunette 24 qui maintient en place une première lumière 34 de la tringle d'enclenchement 3, qui, dans ce cas particulier non limitatif, est mobile linéairement grâce à deux oblongs 32 et 33 qui coopèrent avec des pions 320 et 330 fixés dans la platine 900. Cette tringle 3 possède une denture 31 qui engrène avec un des renvois d'entrainement 51, 52. Ce renvoi entraîné engrène avec l'autre renvoi d'entraînement. Ces deux renvois sont solidaires d'arbres de pivotement 61, 62, à une de leurs extrémités, et font l'ébat de l'ensemble entre la platine 900 et un pont, notamment un pont de barillet. Sur l'autre extrémité des arbres 61, 62, se trouvent les éléments élastiques 71, 72, qui sont avantageusement en tension contre le canon de cadran 8. La cage de tourbillon 10 est en rotation libre à l'intérieur du canon de cadran 8, les éléments élastiques 71, 72, n'étant pas sur le parcours du balancier-spiral 9.

En position T2, le mécanisme se présente dans les conditions suivantes :
La tige de remontoir 1 est tirée et déplace la tirette 2 en position T2. La tirette 2 déplace alors la tringle d'enclenchement 3. Dans son mouvement, elle fait pivoter les renvois d'entrainement 51, 52. Le premier renvoi pivote dans un sens et le seconde dans le sens opposé. Etant solidaire des axes de pivotement 61, 62, qui portent les éléments élastiques 71, 72, la rotation des renvois d'entrainement 51, 52, décolle les éléments élastiques 71, 72, de la paroi du canon de cadran 8 et les amènent en contact avec le balancier-spiral 9.

A ce moment précis, deux situations peuvent exister :
- les éléments élastiques 71, 72, viennent tous les deux en contact avec le balancier-spiral 9 et arrêtent la cage 10 du tourbillon ;
- un seul des éléments élastiques 71, 72, vient en contact avec un bras de la cage de tourbillon et l'autre des éléments élastiques 71, 72, vient en contact avec le balancier 91. Ceci provoque également l'arrêt de la cage 10.

L'agencement des éléments (renvois 51, 52, arbres 61, 62, et éléments élastiques 71, 72) permet de garantir qu'en toute position angulaire de la cage de tourbillon 10, si un élément élastique 71, 72, touche un bras du pont supérieur 12 de la cage 10, l'autre des éléments élastiques 71, 72, touche nécessairement le balancier 91.

En somme, l'invention permet de :
- stopper instantanément une masse inertielle d'un oscillateur, notamment un balancier ;
- stopper instantanément une cage de tourbillon ou de carrousel ;
- garantir un redémarrage de l'oscillateur suite à une mise à l'heure pour laquelle on a stoppé l'oscillateur au préalable ;
- effectuer une mise à l'heure à la seconde près ;
- stopper la cage pour toute position angulaire du tourbillon ou carrousel ;
- cacher le dispositif dans le canon de cadran ;
et ce sans provoquer de surcharge sur la cage.

Ce mécanisme est compact, sa fabrication relève de technologies usuelles, et son coût est donc modéré.

## Revendications

1. Dispositif limiteur (100) d'horlogerie pour une montre, comportant un oscillateur (200) et comportant des moyens pour la limitation de l'écart de marche de cet oscillateur (200) dans les différentes positions de ladite montre (1000) dans l'espace, ledit dispositif (100) comportant au moins un tourbillon (300), ou un carrousel, qui comporte une cage (10) qui est montée pivotante autour d'un axe de cage (D) par rapport à une platine (900) porteuse d'une roue fixe (210) quand ledit dispositif limiteur (100) comporte un tourbillon, laquelle cage (10) porte ledit oscillateur (200) et comporte une roue de cage (41) agencée pour être entraînée par une source d'énergie (400) de la montre (1000) ou d'un mouvement (800) au travers d'un rouage, et laquelle cage (10) porte un mécanisme d'échappement (700) agencé pour coopérer avec ledit oscillateur (200), et comportant un pignon d'échappement (201) engrenant avec ladite roue fixe (210) quand ledit dispositif limiteur (100) comporte un tourbillon ou bien engrenant avec une roue de moyenne ou une roue de seconde, que comporte ledit rouage, quand ledit dispositif limiteur (100) comporte un carrousel, **caractérisé en ce que** ledit dispositif (100) est apte au blocage dudit oscillateur (200) et comporte à cet effet un premier renvoi d'entraînement (51) et un deuxième renvoi d'entraînement (52), solidaires d'arbres (61 ; 62) tous deux pivotés dans ladite platine (900), et de rotation contraire l'un à l'autre et dont l'un deux est entraîné en rotation par une tringle d'enclenchement (3) agencée pour coopérer avec un organe de commande externe audit tourbillon (300) ou carrousel, pour une rotation synchrone dudit premier renvoi d'entraînement (51) et dudit deuxième renvoi d'entraînement (52) sous l'action d'un mouvement exercé par ledit organe de commande, et **en ce que** ledit premier renvoi d'entraînement (51) et ledit deuxième renvoi d'entraînement (52) portent chacun au moins un élément élastique (71 ; 72), comportant au moins une lame élastique et/ou un fil élastique, qui est agencé pour prendre appui sur au moins un mobile dudit oscillateur (200) pour arrêter ledit oscillateur (200) lors d'un passage dudit organe de commande d'une position de repos à une position active dans laquelle chaque dit élément élastique (71 ; 72) est en appui sur un mobile dudit oscillateur (200) ou sur ledit pont supérieur (12) de ladite cage (10), et pour rester à distance dudit pont supérieur (12) et de tout mobile dudit oscillateur (200) quand ledit organe de commande est dans sa dite position de repos.

2. Dispositif limiteur (100) selon la revendication 1, **caractérisé en ce que** ledit premier renvoi d'entraînement (51) et ledit deuxième renvoi d'entraînement (52) ont chacun un débattement angulaire suffisant pour permettre audit élément élastique (71 ; 72) de prendre un appui sur un pont supérieur (12) de ladite cage (10).

3. Dispositif limiteur (100) selon la revendication 1 ou 2, **caractérisé en ce que** ledit dispositif (100) comporte des moyens de mise à l'heure (500) qui constituent ou commandent ledit organe de commande, lequel est agencé pour mouvoir ladite tringle d'enclenchement (3) dans un premier sens d'activation lors du passage desdits moyens de mise à l'heure (500) d'une position de repos T1 à une position activée T2, et pour mouvoir ladite tringle d'enclenchement (3) dans un deuxième sens contraire audit premier sens lors du passage desdits moyens de mise à l'heure (500) de ladite position activée T2 à ladite position de repos T1.

4. Dispositif limiteur (100) selon l'une des revendications 1 à 3, **caractérisé en ce que** ledit organe de commande comporte une tirette (2) montée pivotante et agencée pour, lors d'une translation d'une tige de commande (1) commandant le pivotement de ladite tirette (2), imprimer une translation de ladite tringle d'enclenchement (3) laquelle comporte une crémaillère (31) engrenant avec ledit premier renvoi d'entraînement (51) ou ledit deuxième renvoi d'entraînement (52) pour le passage de la position de repos à la position activée, ou inversement.

5. Dispositif limiteur (100) selon l'une des revendications 1 à 4, **caractérisé en ce que** ledit tourbillon (300) ou carrousel comporte un canon de cadran (8) comportant une paroi sensiblement cylindrique autour de sa dite cage (10), et **en ce que**, dans ladite position de repos, lesdits éléments élastiques (71 ; 72) sont protégés et cachés par ledit canon de cadran (8), et sont rabattus au contact de la surface interne de ladite paroi sensiblement cylindrique ou dans son voisinage immédiat.

6. Dispositif limiteur (100) selon la revendication 5, **caractérisé en ce que** ledit canon de cadran (8) comporte une surface d'affichage frontale (81) sensiblement annulaire, en regard de laquelle est mobile un index d'affichage (13) que comporte ladite cage (10).

7. Dispositif limiteur (100) selon l'une des revendications 1 à 6, **caractérisé en ce que** chaque dit élément élastique (71 ; 72) s'étend en porte-à-faux par rapport à audit arbre (61 ; 62) porteur dudit premier renvoi d'entraînement (51) ou respectivement deuxième renvoi d'entraînement (52).

8. Dispositif limiteur (100) selon l'une des revendications 1 à 7, **caractérisé en ce que** chaque dit élément élastique (71 ; 72) présente une surface convexe du côté de ladite cage (10).

9. Dispositif limiteur (100) selon l'une des revendications 1 à 8, **caractérisé en ce que** chaque dit élément élastique (71 ; 72) comporte, à l'opposé de son arbre (61 ; 62) respectif, une extrémité distale comportant une boucle avec une concavité de même sens que ledit élément élastique (71 ; 72) et un rayon de courbure inférieur à celui de la partie agencée pour venir en contact avec ledit un mobile de l'oscillateur (200).

10. Dispositif limiteur (100) selon l'une des revendications 1 à 9, **caractérisé en ce que** ledit oscillateur (200) est un ensemble balancier-spiral.

11. Montre (1000) comportant un mouvement d'horlogerie (800) comportant des moyens de stockage d'énergie (400), un oscillateur (200), des moyens de mise à l'heure (500), et un dispositif limiteur (100) selon l'une des revendications 1 à 10 comportant ledit oscillateur (200), **caractérisée en ce que** ledit tourbillon (300) ou carrousel constitue un organe d'affichage de ladite montre (1000) ou est agencé pour entraîner au moins un organe d'affichage de ladite montre (1), et **en ce que** lesdits moyens de mise à l'heure (500) constituent ou commandent ledit organe de commande.

## Patentansprüche

1. Uhren-Begrenzungsvorrichtung (100) für eine Uhr, aufweisend einen Oszillator (200) und aufweisend Mittel für die Begrenzung des Gangunterschieds dieses Oszillators (200) in den verschiedenen Positionen der Uhr (1000) im Raum, wobei die Vorrichtung (100) mindestens ein Tourbillon (300) oder ein Karussell aufweist, das ein Gestell (10) aufweist, das um eine Gestellachse (D) im Verhältnis zu einer Werkplatte (900) drehend angebracht ist, die ein festes Rad (210) trägt, wenn die Begrenzungsvorrichtung (100) ein Tourbillon aufweist, wobei das Gestell (10) den Oszillator (200) trägt und ein Gestellrad (41) aufweist, das eingerichtet ist, um von einer Energiequelle (400) der Uhr (1000) oder von einem Uhrwerk (800) über ein Räderwerk angetrieben zu werden, und wobei das Gestell (10) einen Hemmungsmechanismus (700) trägt, der eingerichtet ist, um mit dem Oszillator (200) zusammenzuwirken, und einen Hemmungstrieb (201) aufweist, der in das feste Rad (210) eingreift, wenn die Begrenzungsvorrichtung (100) ein Tourbillon aufweist oder in ein Mittelrad oder ein Sekundenrad eingreift, das das Räderwerk aufweist, wenn die Begrenzungsvorrichtung (100) ein Karussell aufweist, **dadurch gekennzeichnet, dass** die Vorrichtung (100) zur Blockade des Oszillators (200) imstande ist und zu diesem Zweck erstes Antriebs-Zeigerstellrad (51) und ein zweites Antriebs-Zeigerstellrad (52) aufweist, die mit Wellen (61; 62) fest verbunden sind, die beide in der Werkplatte (900) drehen und zueinander entgegengesetzt rotieren und von denen das eine der beiden von einer Einrückstange (3) rotatorisch angetrieben wird, die eingerichtet ist, um mit einem zum Tourbillon (300) oder Karussell externen Steuerorgan für eine synchrone Rotation des ersten Antriebs-Zeigerstellrads (51) und des zweiten Antriebs-Zeigerstellrads (52) unter der Wirkung einer Bewegung, die von dem Steuerorgan ausgeführt wird, zusammenzuwirken, und dass das erste Antriebs-Zeigerstellrad (51) und das zweite Antriebs-Zeigerstellrad (52) jeweils mindestens ein elastisches Element (71; 72) tragen, aufweisend mindestens eine elastische Lamelle und/oder einen elastischen Draht, das eingerichtet ist, um sich auf mindestens einem Drehteil des Oszillators (200) abzustützen, um den Oszillator (200) bei einem Wechsel des Steuerorgans aus einer Ruhestellung in eine aktive Stellung, in welcher sich das elastische Element (71; 72) auf einem Drehteil des Oszillators (200) oder auf der oberen Brücke (12) des Gestells (10) abstützt, zu stoppen, und um von der oberen Brücke (12) und von jedem Drehteil des Oszillators (200) beabstandet zu bleiben, wenn das Steuerorgan in seiner Ruhestellung ist.

2. Begrenzungsvorrichtung (100) nach Anspruch 1, **dadurch gekennzeichnet, dass** das erste Antriebs-Zeigerstellrad (51) und das zweite Antriebs-Zeigerstellrad (52) jeweils einen Winkelausschlag haben, der ausreichend ist, um es dem elastischen Element (71; 72) zu erlauben, sich auf einer oberen Brücke (12) des Gestells (10) abzustützen.

3. Begrenzungsvorrichtung (100) nach Anspruch 1 oder 2, **dadurch gekennzeichnet, dass** die Vorrichtung (100) Einstellmittel (500) aufweist, die das Steuerorgan bilden oder steuern, das eingerichtet ist, um die Einrückstange (3) beim Wechsel der Einstellmittel (500) aus einer Ruhestellung T1 in eine aktivierte Stellung T2 in eine erste Aktivierungsrichtung zu bewegen, und um die Einrückstange (3) beim Wechsel der Einstellmittel (500) aus der aktivierten Stellung T2 in die Ruhestellung T1 in eine zweite Richtung entgegengesetzt zur ersten Richtung zu bewegen.

4. Begrenzungsvorrichtung (100) nach einem der Ansprüche 1 bis 3, **dadurch gekennzeichnet, dass** das Steuerorgan einen Stellhebel (2) aufweist, der drehend angebracht ist und eingerichtet, um bei einer Translation einer Steuerstange (1), die das Drehen des Stellhebels (2) steuert, auf die Einrückstange (3), die eine Zahnstange (31) aufweist, die in das erste Antriebs-Zeigerstellrad (51) oder das zweite Antriebs-Zeigerstellrad (52) für den Wechsel aus der Ruhestellung in die aktivierte Stellung oder umgekehrt eingreift, eine Translation zu übertragen.

5. Begrenzungsvorrichtung (100) nach einem der Ansprüche 1 bis 4, **dadurch gekennzeichnet, dass** das Tourbillon (300) oder Karussell ein Zifferblattrohr (8) aufweist, das um dessen Gestell (10) eine etwa zylindrische Wand aufweist, und dass die elastischen Elemente (71; 72) in der Ruhestellung von dem Zifferblattrohr (8) geschützt und verdeckt sind und in Kontakt mit der inneren Fläche der etwa zylindrischen Wand oder in ihrer unmittelbaren Nähe abgesenkt sind.

6. Begrenzungsvorrichtung (100) nach Anspruch 5, **dadurch gekennzeichnet, dass** das Zifferblattrohr (8) eine etwa ringförmige frontale Anzeigefläche (81) aufweist, der zugewandt ein Anzeigeindex (13) beweglich ist, den das Gestell (10) aufweist.

7. Begrenzungsvorrichtung (100) nach einem der Ansprüche 1 bis 6, **dadurch gekennzeichnet, dass** sich jedes elastische Element (71; 72) im Verhältnis zu der Welle (61; 62), die das erste Antriebs-Zeigerstellrad (51) oder beziehungsweise das zweite Antriebs-Zeigerstellrad (52) trägt, überhängend erstreckt.

8. Begrenzungsvorrichtung (100) nach einem der Ansprüche 1 bis 7, **dadurch gekennzeichnet, dass** jedes elastische Element (71; 72) auf der Seite des Gestells (10) eine konvexe Fläche aufweist.

9. Begrenzungsvorrichtung (100) nach einem der Ansprüche 1 bis 8, **dadurch gekennzeichnet, dass** jedes elastische Element (71; 72) gegenüber seiner jeweiligen Welle (61; 62) ein distales Ende aufweist, das eine Schleife mit einer Konkavität in derselben Richtung wie das elastische Element (71; 72) aufweist, und einen Krümmungsradius aufweist, der kleiner als der des Teils ist, das eingerichtet ist, um mit einem Drehteil des Oszillators (200) in Kontakt zu kommen.

10. Begrenzungsvorrichtung (100) nach einem der Ansprüche 1 bis 9, **dadurch gekennzeichnet, dass** der Oszillator (200) eine Unruh-Spiral-Einheit ist.

11. Uhr (1000), aufweisend ein Uhrwerk (800), aufweisend Energiespeichermittel (400), einen Oszillator (200), Einstellmittel (500) und eine Begrenzungsvorrichtung (100) nach einem der Ansprüche 1 bis 10, die den Oszillator (200) aufweist, **dadurch gekennzeichnet, dass** das Tourbillon (300) oder Karussell ein Anzeigeorgan der Uhr (1000) darstellt oder eingerichtet ist, um mindestens ein Anzeigeorgan der Uhr (1) anzutreiben, und dass die Einstellmittel (500) das Steuerorgan darstellen oder steuern.

## Claims

1. Horological limiting device (100) for a watch, comprising an oscillator (200), and comprising means for limiting the variation of rate of this oscillator (200) in the different positions of said watch (1000) in space, said device (100) comprising at least one tourbillon (300) or a karussel, which comprises a carriage (10) which is mounted such that it pivots about a carriage axis (D) relative to a plate (900) carrying a fixed wheel (210) when said limiting device (100) comprises a tourbillon, which carriage (10) carries said oscillator (200) and comprises a carriage wheel (41) arranged so as to be driven by an energy source (400) of the watch (1000) or of a movement (800) by way of a gear train, and which carriage (10) carries an escapement mechanism (700) arranged so as to cooperate with said oscillator (200), and comprising an escape pinion (201) meshing with said fixed wheel (210) when said limiting device (100) comprises a tourbillon or meshing with a third wheel or a fourth wheel, comprised in said gear train, when said limiting device (100) comprises a karussel, **characterised in that** said device (100) is capable of blocking said oscillator (200) and comprises, for this purpose, a first intermediate drive wheel (51) and a second intermediate drive wheel (52), integral with arbors (61; 62) both pivoted in said plate (900) and rotating in opposite directions to one another, and one of the two thereof is driven in rotation by an engaging rod (3) arranged so as to engage with a control member external to said tourbillon (300) or karussel, for synchronous rotation of said first intermediate drive wheel (51) and of said second intermediate drive wheel (52) under the effect of a movement exerted by said control member, and **in that** said first intermediate drive wheel (51) and said second intermediate drive wheel (52) each carry at least one resilient element (71; 72), comprising at least one resilient strip and/or one resilient wire, which is arranged so as to bear against at least one mobile component of said oscillator (200) in order to stop said oscillator (200) upon passage of said control member from a rest position to an active position wherein each said resilient element (71; 72) bears against a mobile component of said oscillator (200), or against said upper bridge (12) of said carriage (10), and so as to remain remote from said upper bridge (12) and from any mobile component of said oscillator (200) when said control member is in said rest position thereof.

2. Limiting device (100) according to claim 1, **characterised in that** said first intermediate drive wheel (51) and said second intermediate drive wheel (52) each have a sufficient angular displacement to allow said resilient element (71; 72) to bear against an upper bridge (12) of said carriage (10).

3. Limiting device (100) according to claim 1 or claim 2, **characterised in that** said device (100) comprises hand-setting means (500), which constitute or control said control member, which is arranged so as to move said engaging rod (3) in a first activation direction upon the passage of said hand-setting means (500) from a rest position T1 to an activated position T2, and to move said engaging rod (3) in a second direction opposite said first direction upon the passage of said hand-setting means (500) from said activated position T2 to said rest position T1.

4. Limiting device (100) according to any of claims 1 to 3, **characterised in that** said control member comprises a pull-out piece (2) mounted such that it pivots and arranged such that, during a translation of a control stem (1) controlling the pivoting of said pull-out piece (2), it causes a translation of said engaging rod (3), which comprises a rack (31) meshing with said first intermediate drive wheel (51) or said second intermediate drive wheel (52) for passing from the rest position to the activated position, or vice-versa.

5. Limiting device (100) according to any of claims 1 to 4, **characterised in that** said tourbillon (300) or karussel comprises a dial pipe (8) comprising a substantially cylindrical wall about said carriage (10) thereof, and **in that**, in said rest position, said resilient elements (71; 72) are protected and concealed by said dial pipe (8), and are folded back in contact with the inner surface of said substantially cylindrical wall or in the immediate vicinity thereof.

6. Limiting device (100) according to claim 5, **characterised in that** said dial pipe (8) comprises a substantially annular frontal display surface (81), facing which a display index (13) comprised in said carriage (10) is mobile.

7. Limiting device (100) according to any of claims 1 to 6, **characterised in that** each said resilient element (71; 72) extends in the cantilever position relative to said arbor (61; 62) carrying said first intermediate drive wheel (51) or respectively second intermediate drive wheel (52).

8. Limiting device (100) according to any of claims 1 to 7, **characterised in that** each said resilient element (71; 72) has a convex surface on said carriage (10) side.

9. Limiting device (100) according to any of claims 1 to 8, **characterised in that** each said resilient element (71; 72) comprises, opposite the respective arbor (61; 62) thereof, a distal end comprising a loop with a concavity in the same direction as said resilient element (71; 72), and a radius of curvature that is less than that of the part arranged so as to come into contact with said one mobile component of the oscillator (200).

10. Limiting device (100) according to any of claims 1 to 9, **characterised in that** said oscillator (200) is a sprung balance assembly.

11. Watch (1000) comprising a horological movement (800) comprising energy storage means (400), an oscillator (200), hand-setting means (500), and a limiting device (100) according to any of claims 1 to 10, comprising said oscillator (200), **characterised in that** said tourbillon (300) or karussel constitutes a display member of said watch (1000), or is arranged so as to drive at least one display member of said watch (1), and **in that** said hand-setting means (500) constitute or control said control member.
